# EUROPEAN PATENT APPLICATION

(11) **EP 1 326 370 A1**
(43) Date of publication of application: **09.07.2003**
(21) Application number: 01310880.8
(22) Date of filing: 24.12.2001
(51) Int. Cl.: H04L 12/24, H04Q 7/34, H04L 1/24

(54) **Network emulation**

(71) Applicant: BRITISH TELECOMMUNICATIONS public limited company, London EC1A 7AJ (GB)
(72) Inventor: Henning, Ian Douglas, Ipswich, Suffolk IP4 5JB (GB); Voelcker, Rupert Michael, Felixstowe, Suffolk IP11 2YS (GB)
(74) Representative: Lidbetter, Timothy Guy Edwin

(57) **Abstract**

An emulation of telecommunications network is generated in which data packets are delayed and dropped according to a pattern based on measurements of the properties of a telecommunications network (11,12,13), the model being used to delay and drop parts of the data passing through an IP stack.

The measurements are taken within the physical layer protocols (15) of the network. Unlike existing system, which collect data at the interface between the link layer (11) and network layer (12), this system will model all processing of the data necessary for its transmission over the physical medium.

## Description

This invention relates to design tools for the development of applications for current and future networks with characteristics similar to those exhibited by current mobile networks. The characteristics of these networks relevant to this invention are that data transmission errors occur at a frequency of the order of (or greater than) those observed in current mobile networks and that this frequency is in itself highly variable. The invention becomes particularly useful where there are, or are likely to be, different possible implementations of physical layer protocols (channel coding schemes for current mobile networks) which attempt to correct some of these errors or different possible implementations of link layer protocols. In use, the invention could also be applied by those planning the implementation of such networks in that it can be used to determine if network configurations are capable of supporting services and applications targeted to run on them. It could also be applied by those planning the protocols governing the behaviour of such networks to determine the effects of design decisions on higher layers. The terms mobile network and mobile system are used for convenience to refer to any network characterised as described above.

Networks such as those used for mobile communications operate in a great variety of environments, varying from radio base stations giving coverage over a range of many kilometres to those serving microcells of a few tens of metres to provide coverage in indoor environments or where capacity constraints require channel re-use over very short distances. The performance of the radio interface varies considerably across these different environments. In order to test design proposals developers generally build their proposed systems onto an existing network, or part of such a network, which is selected to be representative of all conditions under which the proposed design is required to operate. By doing this they are be able to optimise their systems in the light of the performance and characteristics of the wireless connections - generally known as the air interface.

However, the provision of hardware based test facilities raises a number of difficulties. Hardware based test facilities may not be available at all frequencies and in all locations, especially in the early stages of development of a new system. Identification of a suitable network or part thereof to test the service is increasingly difficult as the nature of applications becomes more complex, involving a range of interactions with both local and remote servers on fixed networks, combined with mobile to mobile communications, each end of which could operate within a different environment. To provide a hardware based test facility for this would be very expensive. There are also the logistic complications of fitting the application onto a live system without disruption to its existing operation, either during installation itself, or as a result of unforeseen problems with the experimental application once installed.

It is known to combine a programmable IP stack with models of IP packet transmission characteristics over networks. This provides a means whereby application developers can test and optimise in a cost effective manner, and so launch applications with a high degree of confidence that they will work in the majority of environments. By emulating the radio system from the IP socket downwards, the process can then be run over a standard local area network and offered to the application development community, who will then simply see a standard IP socket interface, but one which will offer mobile network performance to the application.

There are several published papers discussing methodologies to achieve this. These focus on using Trace Based Modulation (TBM) type approaches. A paper by B. Noble, M. Satyanarayanan, G. Nguyen, and R. H. Katz, *"Trace Based Mobile Network Emulation,"* given at the ACM SIGCOMM Conference, Cannes, France, in August, 1997, summarises this approach and information pertinent to this discussion is taken from this paper. Note that the results in this paper discussed pertain to its use over a WaveLAN network, which is a wireless local area network (W-LAN) technology and not a GSM based cellular system. However the methods described are generalisable into the mobile network area.

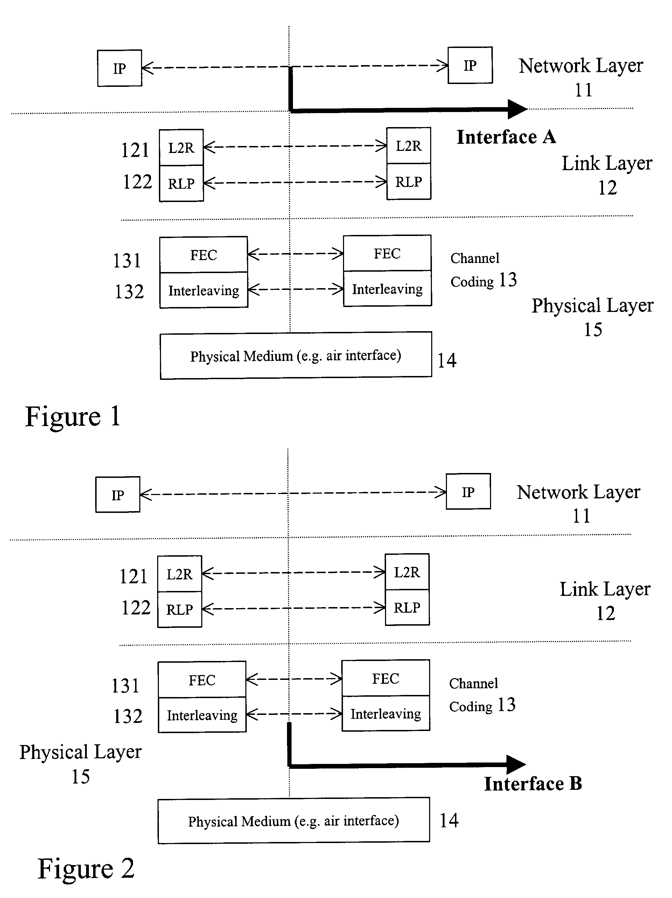

TBM is based on a three-stage approach. Briefly, these stages make use of a model incorporated below the IP stack on a computer which is used to delay and drop data passing through the IP stack. The three stages are as follows:
*1.Collection*: Capture performance data from real networks. Packets from a known workload are generated and the mobile host records data on the packets it generates and the responses it receives, as well some network device characteristics. This process occurs at the interface A (Figure 1), between the internet protocols (network layer) 11 and the link layer 12, using IP based tracing methods and "ping" type packets. This data is then distilled into parameters which are input into a model. The model therefore by definition models all the protocols below the Interface A line; i.e. the link layer protocols 12, the channel coding 13, and the effects of the physical air interface 14(mainly data errors). Note that the network device characteristics are not used in the rest of the process - they are collated purely for additional information and are specific to the type of network being used. The collection process can be performed many times on the same path to obtain a trace family which in effect captures network variation on that path.
*2.Distillation*: This reduces the data captured in the collection process to a list of parameters which can then be applied to a simple time varying network model. Note that this is done on the individual traces collected, and not on some aggregate produced for a trace family.
*3. Modulation:* The modulation layer sits between the IP and Ethernet layers of the protocol stack on a standard computer (PC) and using the data provided by the distillation process delays and drops packets passing through it as they would have been had they been transferred over the real network. As the modulation is performed below the IP layer, users can run (unmodified) applications over TBM and experience end to end performance mirroring the original physical network.

Figure 1 illustrates how the TBM process would be applied in a mobile network scenario, specifically that of GSM. It shows the lower three levels of the standard seven-layer OSI Model in which, from the top down, the layers are: Application, Presentation, Session, Transport (these four levels not shown), Network 11, Data Link 12, and Physical 15. The channel coding 13 provides Forward Error Correction (FEC) 131 and interleaving 132. The FEC 131 corrects some of the errors occurring on the air interface 14 and the interleaving 132 spreads the effects of burst errors across the data to reduce the impact of the burstiness. The Link Layer Protocols 12 (namely the Radio Link Protocol - RLP 121) ensure that data integrity is guaranteed by asking for data frames containing errors which were not corrected by the FEC 131 to be re-transmitted. It is this re-transmission process which introduces delay variations into the data. The Layer 2 Relay (L2R) 122 is responsible for framing the data sent over GSM networks. The channel coding 13 and physical air interface 14 collectively form the physical layer 15.

A problem mentioned in the paper referred to above is caused by the TBM process' need for fine-grained low-drift synchronised clocks if asymmetries in the networks they are modelling are to be reflected in their models. As this approach has to model the delays experienced by data packets, there is a need for accurate clocks to measure these. As there are two ends to a data connection, to make accurate one-way delay calculations clocks are required at each end of the connection and these must be synchronised. If synchronised clocks are not available during the data collection process, then reliable clocking can only be performed at one end of the connection and only round-trip delays can be accounted for in the model. This means that the link has to be assumed to be symmetrical. This is not always the case in cellular mobile data scenarios.

According to the invention, there is provided a process in which data packets are delayed and dropped according to a pattern based on measurements of the properties of a telecommunications network, the model being used to delay and drop parts of the data passing through an IP stack, wherein the measurements are taken within the physical layer protocols.

Therefore, the system will model all processing of the data necessary for its transmission over the physical meduim. The key differentiator, therefore, is the protocol layer at which the data collection is done. This approach has a number of advantages over the prior art approach.

Increased flexibility: measurements from within the physical layer (at the air interface in a wireless system) can be used with any combination of channel coding schemes and link layer protocols and affect the data passing through the simulation accordingly. Using the TBM approach each time either a different channel coding scheme or link layer protocol change is required, there is a need to go through the collection and distillation process to produce new parameters for the model to reflect the change.

Increased Simplicity : the model only has to model how data behaves when transported over the physical medium (the air-interface in mobile networks), and not any of the overlying protocols (including those in the physical layer) and their resultant effects. This should give rise to more accurate models, due to the fact that it is modelling less of the system. In addition, the model only needs to account for data transmission errors: it does not need to model delay as delay variations are introduced above this layer. The synchronisation problem experienced by the prior art system therefore does not arise in the present invention, as the models underlying the invention do not need to account for delay.

Greater breadth of application: as the link layer protocols are implemented in software, users will be able to control the variable aspects of the protocols (such as RLP protocol window sizes) and see the effects on applications directly.

An embodiment of the invention will now be described by way of example, with reference to the accompanying drawings, in which
Figure 1 illustrates the prior art TBM system previously discussed, and
Figure 2 illustrates a system according to the invention
Figure 3 is a flow chart illustrating the production of a link layer error profile.using the method of the invention
Figure 4 illustrates the emulation process implemented on a PC. The Figures illustrate a circuit-switched GSM system operating in non-transparent mode. The principal differences it is used to illustrate, however, also apply to other cellular mobile systems such as packet switched data (GPRS) and UMTS as well as transparent data transmissions.

As previously discussed with reference to Figure 1, the prior art TBM *collection* process occurs at the link layer / network layer interface A. As shown in the embodiment of Figure 2, (in which the same reference numerals are used as in Figure 1 to denote the same elements) the invention requires the data to be collected at the physical layer 15 (air interface in a mobile network) at Interface B. As such, models that this data collection can be used to build only have to model the physical layer 14 and the errors that occur to data transported over it. The physical layer protocols such as the channel coding scheme 13 (there are at least two for circuit switched GSM) as well as the Link Layer protocols 121, 122 (which are different for packet switched and circuit switched mobile data) are thus independent of such models.

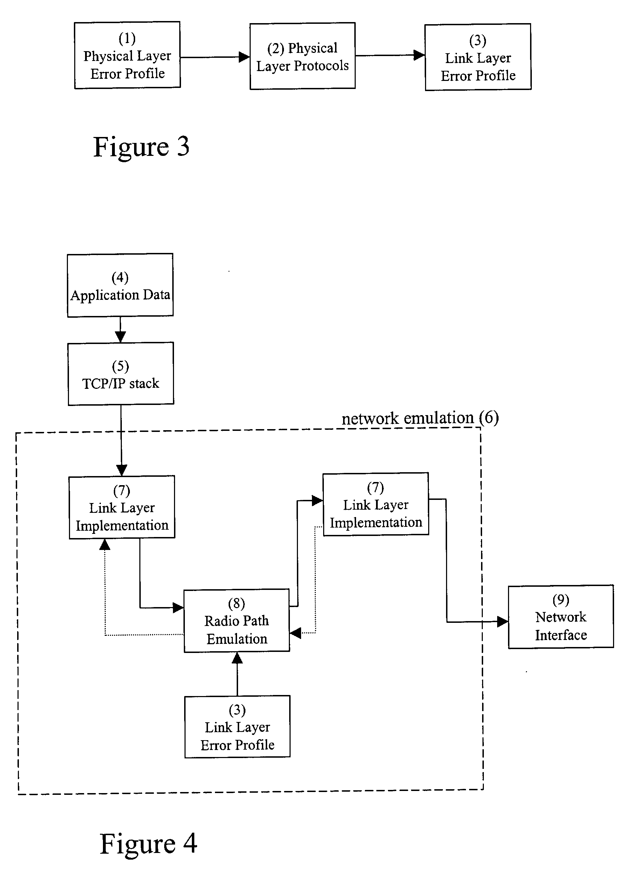

The invention can either use the output of such a model to provide error data, or data collected from the physical layer itself. Data from either of these sources is termed the Physical Layer Error Profile (1) and it forms the primary input to the link layer error profile production process as shown in Figure 3 .

Figure 3 illustrates the process by which this error data is fed through an implementation of the physical layer protocols (2), which would be the Channel Coding for mobile networks, to produce a Link Layer Error Profile (3). This profile would typically be stored on a Personal Computer (PC) for use in the emulation process illustrated in Figure 4 . Advances in computing technologies may eventually negate the need for this storage when PCs are capable of performing the process in Figure 3 as well as the modelling in real time.

Figure 4 illustrates how this Link Layer Error Profile would be used by the emulation process on a typical PC. Data from any application on the PC(4) destined for transmission over the network is passed to the TCP/IP stack(5) as normal. The network emulation(6) is inserted between this TCP/IP stack and the Network Interface (9) on the PC. This TCP/IP stack is modified such that it causes data to be passed through an emulation of the network of interest before it is passed on to the physical network to which the PC is connected. For realistic emulation, it is therefore assumed that any performance degradations introduced by the physical network to which the PC is attached are not significant when compared to those introduced by the network being emulated. For clarity, Figure 4 illustrates network emulation for data travelling in a single direction only, from PC applications to the network. An actual implementation would have data flowing in both directions simultaneously if this occurs on the networks being emulated. The solid lines indicate the path that the data takes as it passes through the emulation. The dotted lines show how control data is fed back by the link layer protocol(7) to request re-transmission of errored data where reliable data transmission is being emulated. The Radio Path Emulation(8) emulates the transmission delay which occurs when data is passed over the physical layer of the emulated network. It also introduces errors as specified by the chosen Link Layer Error Profile(3). The result of this is that it will appear to applications and their users that the data they send and receive via their network has passed over the network being emulated.

As will be understood by those skilled in the art, any or all of the software used to implement the invention can be contained on various transmission and/or storage mediums such as a floppy disc, CD-ROM, optically readable marks, magnetic media, punched card or tape, or on an electromagnetic, optical or acoustic signal so that the program can be loaded onto one or more general purpose computers or could be downloaded over a computer network using a suitable transmission medium.

## Claims

1. A method of generating an emulation of a telecommunications network process in which data packets are delayed and dropped according to a pattern based on measurements of the properties of a telecommunications network, the model being used to delay and drop parts of the data passing through an IP stack, wherein the measurements are taken within the physical layer protocols of the network.

2. A method according to claim 1 wherein error data is fed through an implementation of a physical layer protocol, to produce a Link Layer Error Profile.

3. A method according to claim 2, wherein the physical layer protocol implementation is the Channel Coding for a mobile network

4. A method of emulating a communications system comprising the generation of a Link Layer Error Profile according to the process of claim 2 or 3, generation of data for transmision over the emulated system, causing the said data to be processed acording to the Link Layer Error Profile, and then transmitted to appartus for analysing the resulting processed data

5. A method according to claim 4, wherein data flows in both directions simultaneously through the emulated system.

6. A method according to claim 4 or claim 5, wherein provision is made for user input to control variable aspects of the protocols modelled by the emulation process.

7. A computer program comprising a set of instructions to cause a computer to perform the method according to any of claims 1 to 6

8. Apparatus for generating an emulation of a telecommunications network process in which data packets are delayed and dropped according to a pattern based on measurements of the properties of a telecommunications network, the model being used to delay and drop parts of the data passing through an IP stack, comprising means for taking measurements of such properties within the physical layer protocols of the network.

9. Apparatus according to claim 8, comprising means for feeding error data is fed through an implementation of a physical layer protocol, means for producing a Link Layer Error Profile therefrom, and means for storing said Link Layer Error Profile.

10. Apparatus according to claim 9, wherein the physical layer protocol implementation is the Channel Coding for a mobile network

11. Appartus for emulating a communications system, the apparatus comprising emulation generation apparatus according to claim 9 or 10 for the generation of a Link Layer Error Profile, means for generation of data for transmission over the emulated system, means for causing the said data to be processed according to the Link Layer Error Profile, and means for analysing the resulting processed data

12. Apparatus according to claim 11, comprising means for transmitting data in both directions simultaneously through the emulated system.

13. Apparatus according to claim 11 or 12, wherein provision is made for user input to control variable aspects of the protocols modelled by the emulation process.
